# EUROPEAN PATENT APPLICATION

(11) **EP 0 680 207 A2**
(43) Date of publication of application: **02.11.1995**
(21) Application number: 95106170.4
(22) Date of filing: 25.04.1995
(51) Int. Cl.: H04N 5/44

(54) **Widescreen television receiver**

(30) Priority: 26.04.1994 JP 88634/94
(71) Applicant: KABUSHIKI KAISHA TOSHIBA, Kawasaki-shi, Kanagawa-ken 210 (JP)
(72) Inventor: Kamemoto, Kazuhiro, Fukuya-shi, Saitama-ken 366 (JP)
(74) Representative: Ritter und Edler von Fischern, Bernhard, Dipl.-Ing.

(57) **Abstract**

A scanning-line conversion circuit converts the number of effective scanning lines of a color signal from a YC separation circuit to 480. Further, the scanning-line conversion circuit improves resolution of a luminance signal having a 360/image plane height from the YC separation circuit by the use of a vertical reinforcement signal, and converts the number of effective scanning lines to 480. A squeeze signal from the scanning-line conversion circuit is supplied to an image recording terminal. Thus, recording of the squeeze signal is made possible. Moreover, the image recording terminal is connected to a power-supply terminal through a resistor and a switch. Upon output of the squeeze signal, direct-current voltage is supplied to the image recording terminal so that predetermined direct-current voltage is superimposed upon a color signal. It is made possible by the direct-current voltage to judge that the squeeze signal is outputted.

## Description

### BACKGROUND OF THE INVENTION

### Field of the Invention

The present invention relates to a television image receptor which enables an image of high resolution, which uses a reinforcement signal of a second-generation EDTV signal, to be recorded.

### Related Art Statement

Conventionally, in Japan which meets the demand of high imaging, television broadcasting due to a first-generation EDTV (Extended Definition TV) has been practiced. Further, from 1995, television broadcasting due to a second-generation EDTV is also arranged which enlarges an aspect ratio to 16 : 9 while compatibility is maintained with respect to the television broadcasting of the present NTSC system. In a monitor for the second-generation EDTV, flicker is adapted to be reduced by non-interlace scanning. In this connection, the system has been described in detail in "TELEVISION-SIGNAL TRANSMITTER-RECEIVER" of Japanese Patent Unexamined Publication No. HEI 4-240982 (240982/1992), "GO ON ALSO GROUND-WAVE BROADCASTING TO SATELLITE HI-VISION OF LONG SIDEWAYS IMAGE PLANE" ("NIKKEI ELECTRONICS" feature articles issued on January 31, 1994), or the like.

It is necessary for the second-generation EDTV that transmission is made by the standard the same as that of the television broadcasting signal of the current NTSC system. Accordingly, in the second-generation EDTV, a vertical direction of the second-generation EDTV signal is compressed to 3/4, and only a portion of 16 : 9 at the center of the current NTSC signal in which the aspect ratio is 4 : 3 is made to an effective scanning line. That is, the number of effective scanning lines of the current NTSC signal is 480. Over against this, the number of effective scanning lines of the second-generation EDTV signal to be transmitted is 360. The 360 effective scanning lines are converted in 3 → 4 scanning upon decoding, and are returned to 480. If mere scanning-line conversion is practiced, vertical resolution of the second-generation EDTV signal is deteriorated less than the current NTSC signal. Accordingly, it is decided that the vertical reinforcement signal for improving the vertical resolution is multiplexed and transmitted upon transmission.

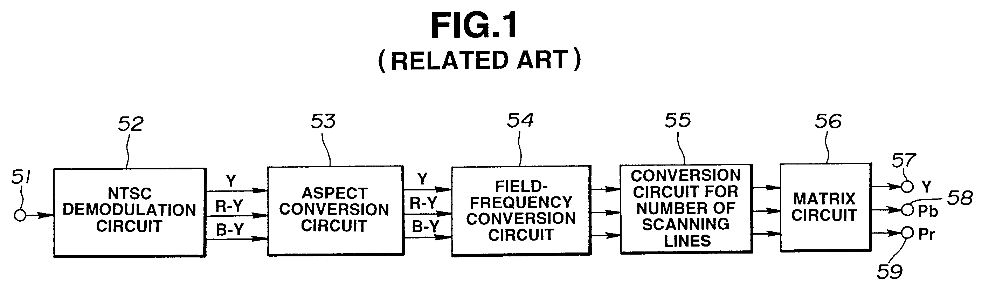

By the way, it is expected that, at the beginning of the broadcasting start, the signal of the current NTSC system in which the aspect ratio is 4 : 3 and the signal of the second-generation EDTV system in which the aspect ratio is 16 : 9 are broadcasted in mixture every programs. Under such state, it has been considered that the similarity is applied also to the beginning of the HDTV broadcasting start having high minuteness. Conventionally, an up-converter for attending the broadcasting of the current NTSC system by the monitor for the HDTV receiving has been merchandised. Fig. 1 is a block diagram showing such up-converter. A device in Fig. 1 shows TCU-1125 manufactured by TOSHIBA.

A composite image signal of the NTSC system is inputted to an input terminal 51. The composite image signal is demodulated by an NTSC demodulation circuit 52, and a luminance signal Y and color-difference signals R - Y and B - Y are outputted to an aspect conversion circuit 53. An aspect ratio of the NTSC signal is 4 : 3, whereas an aspect ratio of the HDTV signal is 16 : 9. Since the aspect conversion circuit 53 practices display while roundness or circularity is maintained to the HDTV monitor in which the aspect ratio is 16 : 9, the inputted luminance signal Y and color-difference signals R - Y and B - Y are compressed to 3/4 times in a horizontal direction, and are outputted to a field-frequency conversion circuit 54.

The field-frequency conversion circuit 54 converts a field frequency of an inputted signal from 59.94 Hz to 60 Hz and gives the same to a conversion circuit for the number of scanning lines 55. The conversion circuit for the number of scanning lines 55 converts 525 of the number of scanning lines of the NTSC system to 1125 of the number of scanning lines of the HDTV system, and outputs the same to a matrix circuit 56. The luminance signal Y and the color-difference signals R - Y and B - Y are converted to a luminance signal Y and color-difference signals Pb and Pr of the HDTV system, and are outputted respectively to output terminals 57 to 59.

The luminance signal Y and the color-difference signals Pb and Pr which are outputted through the output terminals 57 to 59 are supplied to an HDTV monitor (not shown), whereby it is made possible to attend the NTSC broadcasting at the HDTV monitor.

By the way, at present, the HDTV broadcasting in Japan is practiced by satellite broadcasting, and broadcasting channels different from those of the current NTSC broadcasting are used. On the contrary, it is arranged that the second-generation EDTV broadcasting is broadcasted by the use of the channels the same as those of the current NTSC broadcasting. If the second-generation EDTV broadcasting starts, the signal of the current NTSC system and the signal of the second-generation EDTV system exist in mixture every programs in the same broadcasting channel. Accordingly, such function is essential for the receiving side as to identify the current NTSC broadcasting and the second-generation EDTV broadcasting. In view of this, it has been decided that an identification signal which indicates that it is the second-generation EDTV broadcasting is inserted, on the transmitting side, into the twenty-second H (H indicates the horizontal period) and the two-hundred and eighty-fifth H.

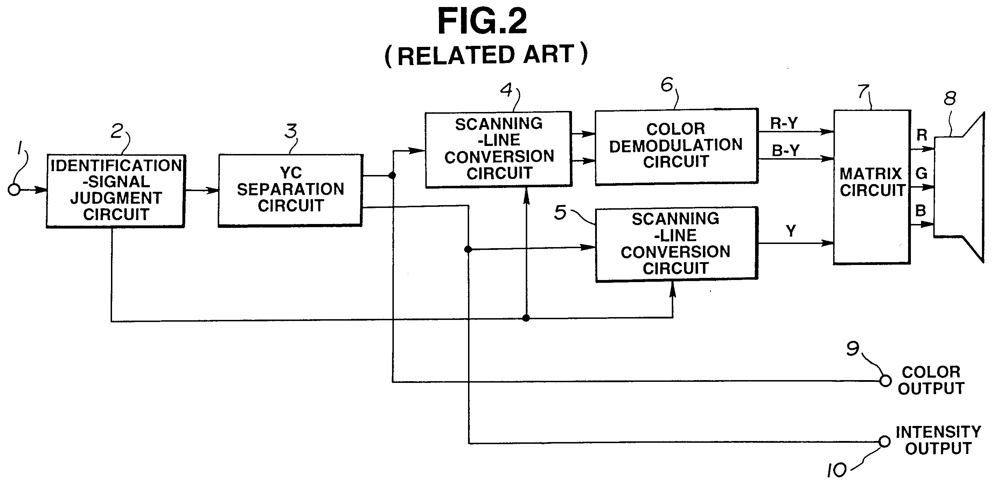

Fig. 2 is a block diagram showing a relevant technique of the television image receptor which has judgment function of such identification signal.

The composite image signal of the current NTSC system or the second-generation EDTV system is inputted to an input terminal 1. The composite image signal is acquired by the fact that the broadcasting signal is received by a tuner (not shown) and, subsequently, is detected. An identification-signal judgment circuit 2 judges the identification signal which is included in the broadcasting signal of the second-generation EDTV system. The identification-signal judgment circuit 2 judges that, in case where the identification signal is detected from the composite image signal, the signal of the second-generation EDTV system is inputted, and judges that, in case where the identification signal is not detected, the signal of the NTSC system is inputted.

The composite image signal is given to a YC separation circuit 3. The YC separation circuit 3 separates the composite image signal to a luminance (Y) signal and a color (C) signal. The YC separation circuit 3 outputs the color signal to a scanning-line conversion circuit 4, and outputs the same also to an image recording terminal 9 as a color output. The YC separation circuit 3 outputs the luminance signal to a scanning-line conversion circuit 5 and outputs the same also to an image recording terminal 10 as a luminance output. In this connection, the YC separation circuit 3 is adapted to be able to output a signal which is not practiced in YC separation processing or treatment, regarding a non-image part of the second-generation EDTV signal.

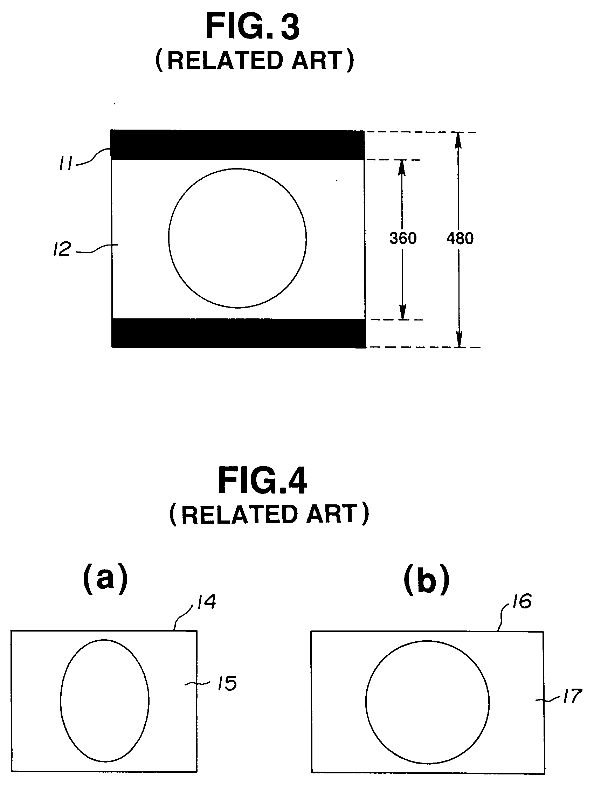

By the way, the second-generation EDTV signal transmits the effective image by a portion at the center of the NTSC image signal in the vertical direction in which the aspect ratio is 16 : 9, and is transmitted in the form of a letter box type in which portions upper and lower the same are made respectively to the non-image parts. Fig. 3 is an explanatory view showing the letter box type.

As shown in Fig. 3, the second-generation EDTV signal has upper and lower non-image parts 11 and a central main image-plane part 12. The main image-plane part 12 corresponds to a portion of 16 : 9 of the current NTSC signal at the center thereof in the vertical direction in which the aspect ratio is 4 : 3. The number of effective scanning lines is 360.

In case where it is indicated by the identification-signal judgment circuit 2 that the signal of the second-generation EDTV system is received, the scanning-line conversion circuit 5 decodes the vertical reinforcement signal for improvement of the resolution which is multiplexed upon the non-image parts 11. The scanning-line conversion circuit 5 uses a decoding output of the vertical reinforcement signal to improve the resolution of the luminance signal, and expands the number of scanning lines to 4/3 times. Thus, the number of effective scanning lines of the luminance signal from the scanning-line conversion circuit 5 comes into 480. The luminance signal Y from the scanning-line conversion circuit 5 is given to a matrix circuit 7.

Moreover, in case where it is indicated by the identification-signal judgment circuit 2 that the signal of the second-generation EDTV system is received, the scanning-line conversion circuit 4 converts, in scanning line, the number of effective scanning lines to 480, and outputs the same to a color demodulation circuit 6. The color signal from the scanning-line conversion circuit 4 is converted to the color-difference signals R - Y and B - Y by the color demodulation circuit 6 and, thereafter, is supplied to the matrix circuit 7. The matrix circuit 7 converts the color-difference signals R - Y and B - Y and the luminance signal Y to R, G and B signals, and outputs the same to the monitor 8. In this manner, an image based on the receiving signal is projected onto the display image plane of the monitor 8.

Fig. 4 is an explanatory view for describing the display on the display image plane of the monitor 8. As described above, the scanning-line conversion circuits 4 and 5 expand the second-generation EDTV signal (hereinafter, referred also to as "letter box signal") having the non-image parts only by 4/3 times in the vertical direction. Accordingly, in case where the aspect ratio of the display image plane of the monitor 8 is 4 : 3, a squeeze image plane 15 which is expanded vertically is displayed onto a display image plane 14, as shown in Fig. 4(a). Meanwhile, in case where the monitor 8 has a display image plane 16 in which the aspect ratio is 16 : 9, a wide image plane 17 which has the correct roundness is displayed as shown in Fig. 4(b).

The image recording terminals 9 and 10 are S1 terminals for VTR image recording, for example. The color signals and the luminance signal from the image recording terminals 9 and 10 are supplied to a VTR (not shown), whereby it is possible to record the received signals to the VTR.

However, since the output from the YC separation circuit 3 is given to the image recording terminals 9 and 10, the image signal which is recorded onto the VTR is the letter box signal, and is a signal in which the number of effective scanning lines is 360. In view of this, it is considered that the outputs from each of the scanning-line conversion circuits 5 and 6 in case where the signal of the second-generation EDTV system is received, that is, the signal having high resolution (hereinafter referred to also as "squeeze signal") which is converted to the 480/image plane height by the vertical reinforcement signal are used as a recording signal of the VTR. However, in this case, there is the following problem. That is, since the identification signal which is multiplexed on the twenty-second H and the two-hundred eighty fifth H is destroyed by the scanning-line conversion processing, it is impossible to set an adequate image plane mode in accordance with the aspect ratio upon reproduction.

By the way, it is arranged that a horizontal reinforcement signal for improving the resolution in the horizontal direction is also multiplexed upon the second-generation EDTV signal. The horizontal reinforcement signal is multiplexed upon a FUKINUKI hole (described on p.147 of "NIKKEI ELECTRONICS Jan. 31, 1994") that is a frequency region which is conjugate with the color signal.

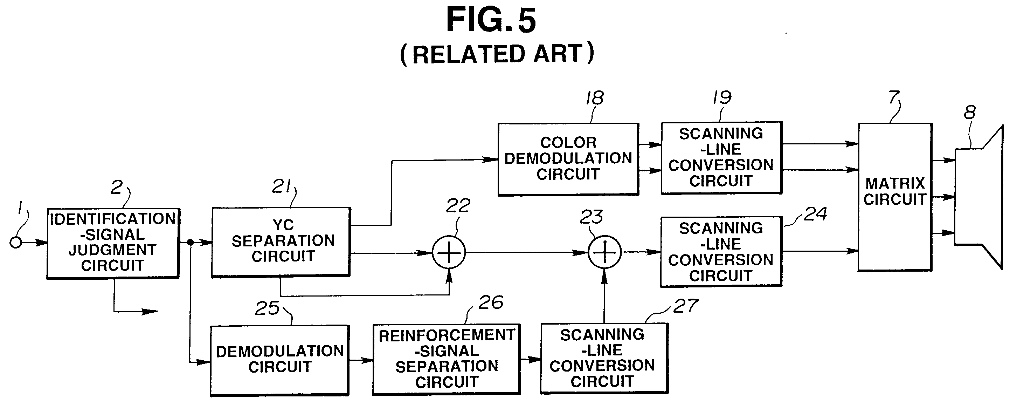

Fig. 5 is a block diagram showing a relevant technique of the television image receptor which has function of decoding the horizontal and vertical reinforcement signals.

The composite image signal of the NTSC system or the second-generation EDTV system is inputted to the input terminal 1. A YC separation circuit 21 separates the inputted composite image signal into the luminance signal and the color signal, and separates the horizontal reinforcement signal which is multiplexed upon the FUKINUKI hole. The YC separation circuit 21 gives the color signal to a color demodulation circuit 18, and gives the luminance signal and the horizontal reinforcement signal to an adder 22. The color demodulation circuit 18 converts the color signal to the color-difference signals R - Y and B - Y and, thereafter, outputs the same to a scanning-line conversion circuit 19. The scanning-line conversion circuit 19 converts the number of effective scanning lines of the inputted color-difference signal to 480, and outputs the same to the matrix circuit 7.

Meanwhile, the luminance signal and the horizontal reinforcement signal from the YC separation circuit 21 are added to each other by the adder 22. Thus, the horizontal resolution of the luminance signal is improved. Meanwhile, the composite image signal is also given to a demodulation circuit 25, and is demodulated. A demodulation output from the demodulation circuit 25 is supplied to a reinforcement-signal separation circuit 26 so that the vertical reinforcement signal which is multiplexed upon the non-image part is separated. The vertical reinforcement signal is a component of a 120/image plane height which is not transmitted by the main image plane part, and is converted, in scanning line, to 360 by a scanning-line conversion circuit 27. An adder 23 adds the luminance signal of the 360/image plane height from the adder 22 and the signal of 360/image plane height from the scanning-line conversion circuit 27 to each other to improve the vertical resolution. The output from the adder 23 is supplied to a scanning-line conversion circuit 24 and is converted, in scanning line, to 480.

The other arrangement and function are similar to those in Fig. 2.

Also in the apparatus shown in Fig. 5, if the signal of the second-generation EDTV system is displayed onto the display image plane in which the aspect ratio is 4 : 3, the squeeze image plane shown in Fig. 4(a) is displayed. Furthermore, if the signal is displayed on the display image plane in which the aspect ratio is 16 : 9, the wide aspect image plane shown in Fig. 4(b) is projected.

By the way, in the apparatus shown in Fig. 5, in the squeeze signal from the scanning-line conversion circuits 19 and 24, not only the vertical resolution, but also the horizontal resolution is improved. The horizontal resolution is about 1.5 times that of the current NTSC signal. Accordingly, in order to record the squeeze signal without deteriorating the same, a signal processing circuit having extremely wide band is necessary or is required. However, in the conventional or prior-art domestic VTR, a VTR of a VHS system, for example, a band width thereof has only about 3 MHz. It is impossible to record or reproduce the squeeze signal in which the resolution is improved by the horizontal reinforcement signal.

### SUMMARY OF THE INVENTION

An object of the present invention is to provide a television image receptor which can record a squeeze signal.

Another object of the present invention is to provide a television image receptor which can record a squeeze signal and which can judge whether or not a recording signal is the squeeze signal.

According to the invention, there is provided a television image receptor characterized by comprising:
scanning-line conversion means to which a wide television signal and a non-wide television signal upon which a reinforcement signal for compensating for a main image plane signal corresponding to a main image plane part at a center of an image plane is multiplexed are inputted, the scanning-line conversion means outputting a squeeze signal which improves resolution of the main image plane signal by the use of the reinforcement signal; and
output means for outputting the squeeze signal as one for image recording.

Further, according to the invention, there is provided a television image receptor characterized by comprising:
system judgment means for judging whether any one of a wide television signal and a non-wide television signal upon which a reinforcement signal for compensating for a main image plane signal corresponding to a main image plane part at the center of an image plane is multiplexed is inputted, to output a judgment result;
luminance-signal and color-signal separation means for separating an inputted television signal to a luminance signal and a color signal;
color-signal scanning-line conversion means for increasing the number of scanning lines of the color signal in case where it is indicated by the judgment result that the wide television signal is inputted;
color demodulation means for demodulating an output from the color-signal scanning-line conversion means to acquire a color difference signal;
reinforcement-signal demodulation means for demodulating the reinforcement signal, in case where it is indicated by the judgment result that the wide television signal is inputted, to improve resolution of the luminance signal;
luminance-signal scanning-line conversion means for increasing the number of effective scanning lines of the luminance signal from the reinforcement-signal demodulation means in case where it is indicated by the judgment result that the wide television signal is inputted;
matrix means for creating R, G and B signals from outputs from the color-signal scanning-line conversion means and the luminance-signal scanning-line conversion means;
image recording terminals for rendering the outputs from the color-signal scanning-line conversion means and the luminance-signal scanning-line conversion means; and
a switch for connecting the image recording terminal and a power-supply terminal for giving predetermined direct-current voltage, to each other in case where it is indicated by the judgment result that the wide television signal is inputted.

Moreover, according to the invention, there is provided a television image receptor characterized by comprising:
scanning-line conversion means into which a wide television signal or a non-wide television signal upon which a reinforcement signal for compensating for a main image plane signal corresponding to a main image plane part at the center of an image plane is multiplexed is inputted, the scanning-line conversion means outputting a squeeze signal which improves resolution of the main image plane signal, by the use of the reinforcement signal;
system conversion means for converting the squeeze signal to a signal of an HDTV system; and
output means for outputting the signal of the HDTV system from the system conversion means as one for image recording.

### BRIEF DESCRIPTION OF THE DRAWINGS

Fig. 1 is a block diagram showing an up-converter for converting a signal of an NTSC system to a signal of an HDTV system;
Fig. 2 is a block diagram showing a relevant technique of a television image receptor;
Fig. 3 is an explanatory view for describing a letter box type;
Fig. 4 is an explanatory view for describing a squeeze image plane;
Fig. 5 is a block diagram showing a prior-art television image receptor;
Fig. 6 is a block diagram showing an embodiment of a television image receptor according to the invention;
Fig. 7 is a block diagram showing another embodiment of the invention; and
Fig. 8 is a block diagram showing a specific arrangement of an up-converter in Fig. 2.

### DETAILED DESCRIPTION OF THE PREFERRED EMBODIMENTS

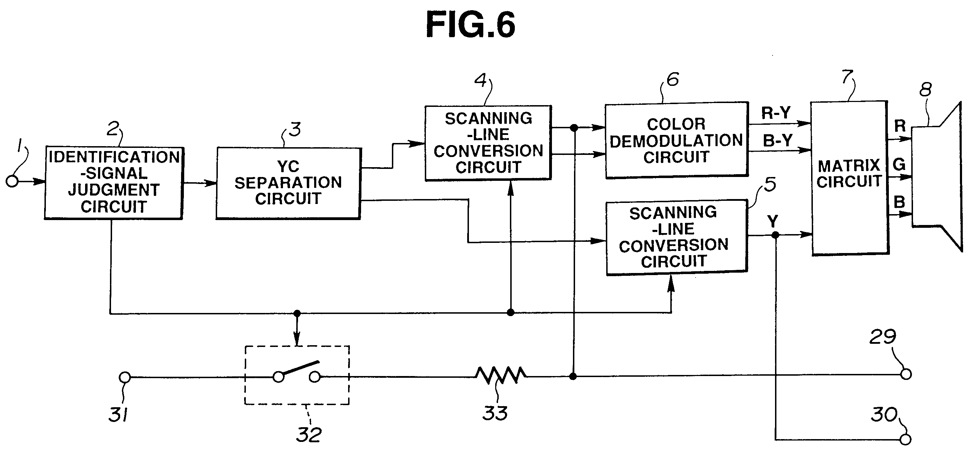

Fig. 6 is a block diagram showing an embodiment of a television image receptor according to the present invention. In Fig. 6, the same reference numerals are applied to arrangement components the same as those in Fig. 2. The present embodiment is directed to an example which can be applied to an arrangement in which a vertical reinforcement signal is used to improve vertical resolution.

A composite image signal of an NTSC system or a second-generation EDTV system, for example, is inputted to the input terminal 1. A broadcasting signal of the second-generation EDTV system is a signal of a letter box type. An identification signal is multiplexed upon the twenty-second (22) H and the two-hundred and eighty fifth (285) H, and a vertical reinforcement signal for improving vertical resolution of a main image plane is multiplexed upon a non-image part. The composite image signal is supplied to an identification-signal judgment circuit 2. The identification-signal judgment circuit 2 judges whether or not an identification signal is multiplexed upon the inputted composite image signal. In case where the identification signal is multiplexed, the identification-signal judgment circuit 2 judges that the inputted composite image signal is the signal of the second-generation EDTV system. In case where the identification signal is not multiplexed, the identification-signal judgment circuit 2 judges that the inputted composite image signal is the signal of the NTSC system.

The composite image signal is supplied to the YC separation circuit 3. The YC separation circuit 3 separates a luminance signal and a color signal from the composite image signal. The YC separation circuit 3 outputs the color signal to the scanning-line conversion circuit 4, and outputs the luminance signal to the scanning-line conversion circuit 5. Further, the YC separation circuit 3 is adapted to output a signal which does not make the YC separation processing to the scanning-line conversion circuit 5, regarding the non-image part of the second-generation EDTV signal. In this connection, the number of effective scanning lines of the luminance signal and the color signal from the YC separation circuit 3 is 360.

In case where it is indicated by the identification-signal judgment circuit 2 that the signal of the second-generation EDTV system is inputted, the scanning-line conversion circuit 5 decodes the vertical reinforcement signal which is multiplexed upon the non-image part, and uses the decoded vertical reinforcement signal to improve the vertical resolution of the luminance signal. Moreover, the scanning-line conversion circuit 5 converts the luminance signal of a 360/image plane height to a signal of a 480/image plane height, and outputs the same to the matrix circuit 7.

In case where it is indicated by the identification-signal judgment circuit 2 that the signal of the second-generation EDTV system is inputted, the scanning-line conversion circuit 4 converts the color signal of the 360/image plane height from the YC separation circuit 3 to a signal of the 480/image plane height, and outputs the same to the matrix circuit 7. The matrix circuit 7 converts the inputted color-difference signals R - Y and B - Y and luminance signal Y to R, G and B signals, and outputs the same to the monitor 8. The monitor 8 is adapted to project an image based on the inputted image signal, on a display image plane (not shown).

In the present embodiment, the outputs from the respective scanning-line conversion circuits 4 and 5 are adapted to be outputted also to image recording terminals 29 and 30 respectively as the color signal output and the luminance signal output. Furthermore, the image recording terminal 29 is connected to a power-supply terminal 31 through a resistor 33 and a switch 32. Direct-current voltage from a direct-current power supply (not shown) is adapted to be applied to the power-supply terminal 31. In case where it is indicated by the identification-signal judgment circuit 2 that the signal of the second-generation EDTV system is inputted, the switch 32 is turned ON, while, in case where it is indicated that the signal of the NTSC system is inputted, the switch 32 is turned OFF. That is, in case where the signal of the second-generation EDTV system is inputted, predetermined direct-current voltage is adapted to be supplied to the image recording terminal 29.

It is possible to judge whether or not the signal which is outputted to the image recording terminals 29 and 30 is the squeeze signal, by the fact that the direct-current voltage is superimposed upon the color signal. In this connection, a method in which the direct-current voltage is superimposed upon the output terminal for the image recording of the color signal to identify whether or not the signal is the squeeze signal is standardized by EIAJ (Japan Electric-Mechanical Industry) - CXP - 1202. If a VTR which conforms to the standard is used to record, in image, the squeeze signal, the direct-current voltage is adapted to be superimposed also upon the respective color output terminals of the VTR upon reproduction.

Operation of the embodiment which is arranged in this manner will subsequently be described.

The inputted composite image signal is given to the identification-signal judgment circuit 2 so that it is judged whether or not the identification signal is inserted. Further, the composite image signal is supplied to the YC separation circuit 3 so that the luminance signal and the color signal are separated. The color signal and the luminance signal from the YC separation circuit 3 are given respectively to the scanning-line conversion circuits 4 and 5.

Now, it is assumed that the composite image signal which is inputted to the input terminal 1 is the signal of the NTSC system. In this case, the scanning-line conversion circuits 4 and 5 output the inputted signal as it is, on the basis of the judgment result of the identification-signal judgment circuit 2. That is, the color signal from the YC separation circuit 3 is supplied to the color demodulation circuit 6 through the scanning-line conversion circuit 4, and is converted to the color-difference signals R - Y and B - Y and, thereafter, is supplied to the matrix circuit 7. Further, the luminance signal from the YC separation circuit 3 is supplied to the matrix circuit 7 through the scanning-line conversion circuit 5.

The luminance signal and the color-difference signal from the YC separation circuit 3 are the signal of the 480/image plane height. The matrix circuit 7 converts the luminance signal and the color-difference signal to the R, G and B signals to output the same to the monitor 8. It is assumed that the aspect ratio of the display image plane of the monitor 8 is 16 : 9. In this case, the monitor 8 compresses the inputted signal to 3/4 times in the horizontal direction, to display the NTSC image at the center of the image plane. In case where the aspect ratio of the display image plane of the monitor 8 is 4 : 3, the output from the matrix circuit 7 is displayed as it is, whereby it is possible to project the NTSC image by the roundness 1.

Moreover, in this case, the color signal and the luminance signal in each of which the number of effective scanning lines is 480/image plane height are outputted to the image recording terminals 29 and 30. In this connection, in this case, the switch 32 is turned OFF, and the color signal from the YC separation circuit 3 is outputted as it is without the fact that the direct-current voltage is superimposed thereupon.

Here, it is assumed that the signal of the second-generation EDTV system is inputted to the input terminal 1. In this case, the scanning-line conversion circuits 4 and 5 practice the scanning-line conversion processing. That is, the color signal in which the number of effective scanning lines is the 360/image plane height, from the YC separation circuit 3 is converted to the signal having the 480/image plane height by the scanning-line conversion circuit 4, and is supplied to the color demodulation circuit 6. Furthermore, the scanning-line conversion circuit 5 decodes the vertical reinforcement signal which is multiplexed upon the non-image part, to improve the resolution of the luminance signal having the 360/image plane height, from the YC separation circuit 3 and, thereafter, converts the signal to the signal having the 480/image plane height.

The color demodulation circuit 6 converts the color signal to the color-difference signals R - Y and B - Y to output the same to the matrix circuit 7. The matrix circuit 7 converts the color-difference signals R - Y and B - Y from the color demodulation circuit 6 and the luminance signal Y from the scanning-line conversion circuit 5 to the R, G and B signals to output the same to the monitor 8. In this manner, the squeeze signal is supplied to the monitor 8. In case where the aspect ratio of the display image plane of the monitor 8 is 16 : 9, the wide image plane having the correct roundness in which the number of effective scanning lines is the 480/image plane height is projected onto the entire or whole area of the display image plane.

Moreover, in the present embodiment, the color signal and the luminance signal having the 480/image plane height, from the scanning-line conversion circuits 4 and 5 are respectively supplied to the image-recording terminals 29 and 30. Furthermore, in case where the signal of the second-generation EDTV system is inputted, the switch 32 is turned ON. Thus, the direct-current voltage which is supplied to the power-supply terminal 31 is applied to the image-recording terminal 29 through the switch 32 and the resistor 33. In this manner, the predetermined direct-current voltage is superimposed upon the color signal from the scanning-line conversion circuit 4. By the direct-current voltage, it is made possible to judge that the squeeze signal is outputted to the image-recording terminals 29 and 30.

Outputs from the respective image-recording terminals 29 and 30 are supplied to an S1 terminal of a VTR (not shown), for example, whereby it is possible to record the squeeze image. Upon reproduction, the direct-current voltage which is superimposed upon the reproduction signal of the VTR is detected, whereby it is judged that the reproduction signal is the squeeze signal, so that it is possible to set the image plane mode to an adequate mode.

In this manner, the present embodiment is arranged such that the image recording terminal is provided which outputs the squeeze signal after having been converted, in scanning line, to the 480/image plane height by the scanning-line conversion circuits 4 and 5 and, in case where the squeeze signal is outputted, the predetermined direct-current voltage is superimposed upon the color signal. Thus, it is possible to easily judge whether or not the image recording signal is the squeeze signal.

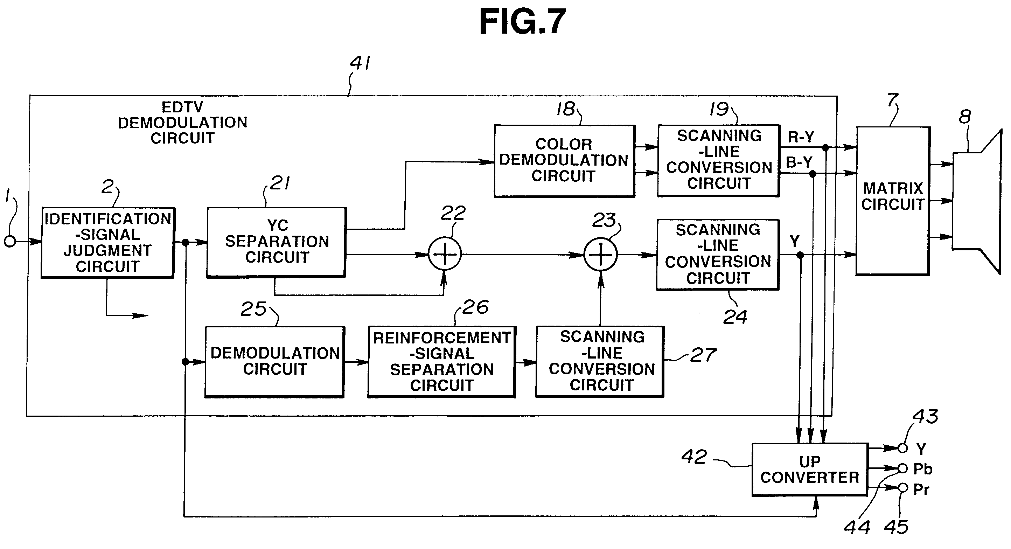

Fig. 7 is a block diagram showing another embodiment of the invention. In Fig. 7, the same reference numerals are applied to arrangement components the same as those in Fig. 6, and the description thereof will be omitted.

In Fig. 7, a composite image signal of, for example, the NTSC system or the second-generation EDTV system is inputted to the input terminal 1 of an EDTV demodulation circuit 41. The composite image signal is supplied to the YC separation circuit 21 through the identification-signal judgment circuit 2. The YC separation circuit 21 separates the inputted composite image signal into the color signal and the luminance signal, and separates the horizontal reinforcement signal which is multiplexed upon the FUKINUKI hole. The YC separation circuit 21 gives the color signal to the color demodulation circuit 18, and gives the luminance signal and the horizontal reinforcement signal to the adder 22. The adder 22 adds the luminance signal and the horizontal reinforcement signal to each other to improve the horizontal resolution of the luminance signal and, thereafter, outputs the same to the adder 23.

The color demodulation circuit 18 demodulates, in color, the inputted color signal to acquire the color difference signals R - Y and B - Y, to thereby output the same to the scanning-line conversion circuit 19. In case where it is indicated by the identification-signal judgment circuit 2 that the signal of the second-generation EDTV system is inputted, the scanning-line conversion circuit 19 converts the inputted color difference signals R - Y and B -Y of the 360/image plane height, to the color difference signal of the 480/image plane height, to output the same to the matrix circuit 7.

Meanwhile, the output from the identification-signal judgment circuit 2 is also given to the demodulation circuit 25. The demodulation circuit 25 demodulates the inputted composite image signal to output the demodulation output to the reinforcement-signal separation circuit 26. The reinforcement-signal separation circuit 26 separates the vertical reinforcement signal which is multiplexed upon the non-image part of the signal of the second-generation EDTV system, to output the same to the scanning-line conversion circuit 27. The vertical reinforcement signal is a component of the 360 to 480/image plane height in the vertical high region. The scanning-line conversion circuit 27 converts, in scanning line, a component in which the number of effective scanning lines is 120, so as to be converted to a signal of the 360/image plane height, to thereby output the same to the adder 23. The adder 23 adds the vertical reinforcement signal from the scanning-line conversion circuit 27 to the output from the adder 22, to thereby improve the resolution of the luminance signal to output the same to the scanning-line conversion circuit 24. In case where it is indicated that the signal of the second-generation EDTV system is inputted by the identification-signal judgment circuit 2, the scanning-line conversion circuit 24 converts the inputted luminance signal Y of the 360/image plane height to the luminance signal of the 480/image plane height, to output the same to the matrix circuit 7.

In the present embodiment, the color-difference signals R - Y and B - Y and the luminance signal Y from the scanning-line conversion circuits 19 and 24 are supplied also to an up-converter 42. The up-converter 42 is so arranged as to be able to convert the inputted signal of the NTSC system or the squeeze signal to the HDTV signal to output the same.

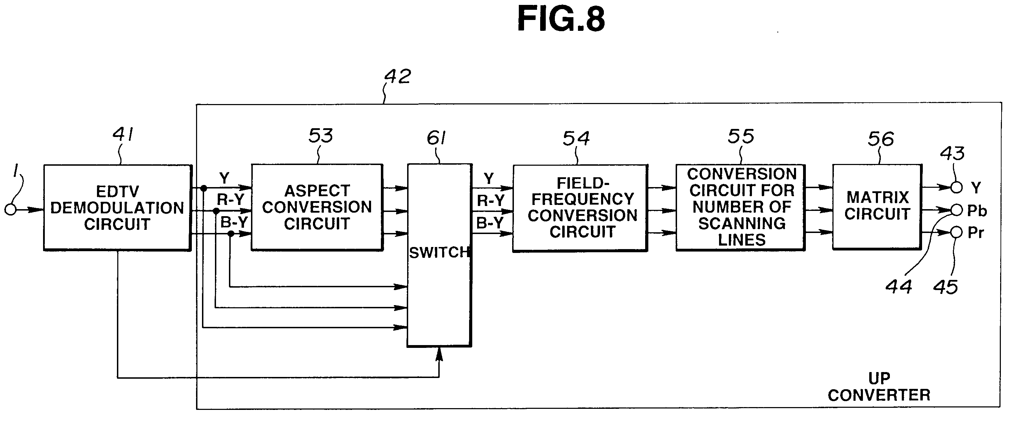

Fig. 8 is a block diagram showing a specific arrangement of the up-converter 42 in Fig. 7.

The signal of the NTSC system or the squeeze signal is supplied from the EDTV demodulation circuit 41 to an aspect conversion circuit 53 and a switch 61. The squeeze signal is the luminance signal Y and the color-difference signals R - Y and B - Y of the 480/image plane height. The aspect conversion circuit 53 compresses the signal of the NTSC system in which the aspect ratio is 4 : 3, by 3/4 times in the horizontal direction, to output the same to the switch 61.

The output from the identification-signal judgment circuit 2 of the EDTV demodulation circuit 41 is also given to the switch 61. In case where it is indicated by the identification-signal judgment circuit 2 that the signal of the second-generation EDTV system is inputted, the switch 61 selects the squeeze signal from the EDTV demodulation circuit 41. In case where it is indicated that the signal of the NTSC system is inputted, the switch 61 selects the output from the aspect conversion circuit 53 to output the same to a field-frequency conversion circuit 54.

The field-frequency conversion circuit 54 converts the field frequency of the inputted signal from 59.94 Hz to 60 Hz to output the same to a conversion circuit for the number of scanning lines 55. The conversion circuit for the number of scanning lines 55 converts the number of scanning lines of the inputted signal from 525 to 1125 to output the same to a matrix circuit 56. The matrix circuit 56 is so arranged as to process, in matrix, the inputted luminance signal Y and color difference signals Pb and Pr to convert the same to the luminance signal Y and the color difference signals Pb and Pr of the HDTV system, to thereby output the same respectively to image recording terminals 43 to 45.

Operation of the embodiment arranged in this manner will subsequently be described.

The composite image signal which is inputted through the input terminal 1 is given to the identification-signal judgment circuit 2 so that it is judged whether or not the identification signal is inserted. The composite image signal is given to the YC separation circuit 21 so that the color signal, the luminance signal and the horizontal reinforcement signal are separated.

Now, it is assumed that the signal of the NTSC system is inputted to the input terminal 1. In this case, the horizontal reinforcement signal is not multiplexed. The luminance signal from the YC separation circuit 21 is outputted, as it is, to the matrix circuit 7 and the up-converter 42 through the adders 22 and 23 and the scanning-line conversion circuit 24. Meanwhile, the color signal is converted to the color-difference signals R - Y and B - Y in the color demodulation circuit 18 and, thereafter, is supplied to the matrix circuit 7 and the up-converter 42. The matrix circuit 7 converts the luminance signal Y and the color-difference signals R - Y and B - Y to the R, G and B signals to supply the same to the monitor 8. The monitor 8 compresses these signals by 3/4 times in the horizontal direction, for example, to thereby project the NTSC image in which the aspect ratio is 4 : 3, onto the center on the display image plane in which the aspect ratio is 16 : 9, in the right- and left-hand direction by the correct roundness.

The luminance signal Y and the color-difference signals R - Y and B - Y which are supplied to the up-converter 42 are given to the aspect conversion circuit 53, and are compressed horizontally to 3/4. In this case, the switch 61 selects the output from the aspect conversion circuit 53 by the identification-signal judgment circuit 2. The signal which is converted in aspect is supplied to the field-frequency conversion circuit 54 so that the field frequency is converted to 60 Hz. The signal in which the field frequency is converted is converted to 1125 of the number of scanning lines, by the conversion circuit of the number of scanning lines 55 and, thereafter, is given to the matrix circuit 56 so as to be processed in matrix. Thus, the signal is outputted from the image recording terminals 43 to 45 as the luminance signal Y and the color difference signals Pb and Pr of the HDTV system.

Meanwhile, it is assumed that the signal of the second-generation EDTV system is inputted through the input terminal 1. In this case, the luminance signal and the horizontal reinforcement signal from the YC separation circuit 21 are added to each other in the adder 22 so that the horizontal resolution of the luminance signal is improved. Meanwhile, the signal of the second-generation EDTV system which is demodulated by the demodulation circuit 25 is given to the reinforcement-signal separation circuit 26 so that the vertical reinforcement signal is separated. The scanning-line conversion circuit 27 converts, in scanning line, the vertical reinforcement signal to the 360/image plane height to output the same to the adder 23. Thus, the output from the adder 22 and the output from the scanning-line conversion circuit 27 are added to each other by the adder 23, whereby the vertical resolution of the luminance signal is also improved so as to be given to the scanning-line conversion circuit 24.

The scanning-line conversion circuits 19 and 24 convert the color-difference signals R - Y and B - Y and the luminance signal Y of the 360/image plane height to the squeeze signal of the 480/image plane height to output the same to the matrix circuit 7 and the up-converter 42. The luminance signal Y and the color-difference signals R - Y and B - Y are converted to the R, G and B signals by the matrix circuit 7 and are supplied to the monitor 8. In this manner, the image of the second-generation EDTV broadcasting is projected on the display image plane of the monitor 8 with the correct roundness.

Meanwhile, in this case, the switch 61 of the up-converter 42 is controlled by the identification-signal judgment circuit 2 to select the output from the EDTV demodulation circuit 41. Accordingly, the squeeze signal from the EDTV demodulation circuit 41 is supplied to the field-frequency conversion circuit 54 through the switch 61 without being converted in aspect. The squeeze signal is converted to 60 Hz of the field frequency by the field-frequency conversion circuit 54. The number of scanning lines is converted to 1125 by the conversion circuit for the scanning line 55. Thus, the squeeze signal is supplied to the matrix circuit 56. The matrix circuit 56 converts the luminance signal Y and the color-difference signals R - Y and B - Y of the second-generation EDTV system to the luminance signal Y and the color difference signals Pb and Pr of the HDTV system by the matrix processing to output the same to the image recording terminals 43 to 45.

The luminance signal Y and the color difference signals Pb and Pr from the image recording terminals 43 to 45 are supplied to Y, Pb and Pr input terminals of a VTR of the HDTV system (not shown), whereby it is possible to record the squeeze signal which is converted to the HDTV system.

In this manner, the present embodiment is arranged such that the up-converter is provided in which the squeeze signal from the EDTV demodulation circuit is changed to the signal of the HDTV system, and the recording terminal is provided for supplying the output from the up-converter to the VTR of the HDTV system, whereby recording of the squeeze signal is made possible.

In connection with the above, in each of the above-described embodiments, an example of the second-generation EDTV system having compatibility with the NTSC system has been described. However, a similar image improvement method can be carried into practice also in a PAL system. Thus, it will be apparent that the present embodiments can be applied to the PAL system. In this case, the identification-signal judgment circuit, the YC separation circuit, the color demodulation circuit and the matrix circuit should be changed or altered to a specification which is based on the PAL system, and the scanning-line conversion circuit should also correspond to the number of scanning lines of the PAL system.

Further, the above-described embodiments do not particularly refer to the monitor upon reproduction of the VTR. However, a monitor which is based on an HDTV-signal format is necessary.

Generally, an HDTV image receptor which is commercially available is so arranged as to be able to receive, in image, an image signal of the HDTV system, and to receive also an image signal of the current NTSC system. Moreover, it is considered that an HDTV image receptor which will be developed in the future is so arranged as to be capable of receiving, in image, not only an image signal of the NTSC system, but also an image signal of the second-generation EDTV system. The above-described various embodiments are applied to such HDTV image receptor whereby it is possible to record also a signal of any system without deterioration of the resolution. Thus, the present invention is very or extremely useful.

In this invention, it is apparent that working modes different in a wide range can be formed on the basis of this invention without departing from the spirit and scope of the invention. This invention is not restricted by any specific embodiments except being limited by the appended claims.

## Claims

1. A television image receptor
comprising:
scanning-line conversion means (4) to which a wide television signal and a non-wide television signal upon which a reinforcement signal for compensating for a main image plane signal corresponding to a main image plane part at a center of an image plane is multiplexed are inputted, the scanning-line conversion means outputting a squeeze signal which improves resolution of the main image plane signal by the use of the reinforcement signal; and
output means (29, 30) for outputting the squeeze signal as one for image recording.

2. A television image receptor according to claim 1, characterized in that the reinforcement signal is a vertical reinforcement signal which is multiplexed during a corresponding period upon non-image parts at upper and lower portions of the image plane.

3. A television image receptor according to claim 1, characterized in that the scanning-line conversion means comprises:
system judgment means for judging whether an inputted signal is the wide television signal or the non-wide television signal, to output a judgment result;
reinforcement-signal demodulation means for demodulating the reinforcement signal in case where it is indicated by the judgment result that the wide television signal is inputted, to improve resolution of the main image plane signal; and
squeeze-signal creation means for increasing the number of effective scanning lines of the main image plane signal from the reinforcement-signal demodulation means in case where it is indicated by the judgment result that the wide television signal is inputted, to create a squeeze signal.

4. A television image receptor according to claim 3, characterized in that the output means has an image recording terminal for rendering the output from the squeeze-signal creation means.

5. A television image receptor according to claim 1, characterized in that the output means comprises direct-current voltage superimposition means for superimposing predetermined direct current voltage upon the output from the squeeze-signal creation means to output the same.

6. A television image receptor according to claim 5, characterized in that the direct-current voltage superimposition means comprises a switch for connecting the image recording terminal and a predetermined power-supply terminal to each other in case where it is indicated, depending upon a judgment result as to whether the inputted signal is the wide television signal or the non-wide television signal, that the wide television signal is inputted.

7. A television image receptor
comprising:
system judgment means (2) for judging whether any one of a wide television signal and a non-wide television signal upon which a reinforcement signal for compensating for a main image plane signal corresponding to a main image plane part at the center of an image plane is multiplexed is inputted, to output a judgment result;
luminance-signal and color-signal separation means (3) for separating an inputted television signal to an luminance signal and a color signal;
color-signal scanning-line conversion means (4) for increasing the number of scanning lines of the color signal in case where it is indicated by the judgment result that the wide television signal is inputted;
color demodulation means (6) for demodulating an output from the color-signal scanning-line conversion means to acquire a color difference signal;
reinforcement-signal demodulation means (5) for demodulating the reinforcement signal, in case where it is indicated by the judgment result that the wide television signal is inputted, to improve resolution of the luminance signal;
luminance-signal scanning-line conversion means (5) for increasing the number of effective scanning lines of the luminance signal from the reinforcement-signal demodulation means in case where it is indicated by the judgment result that the wide television signal is inputted;
matrix means (7) for creating R, G and B signals from outputs from the color-signal scanning-line conversion means and the luminance-signal scanning-line conversion means;
image recording terminals (29, 30) for rendering the outputs from the color-signal scanning-line conversion means and the luminance-signal scanning-line conversion means; and
a switch (32) for connecting the image recording terminal and a power-supply terminal for giving predetermined direct-current voltage, to each other in case where it is indicated by the judgment result that the wide television signal is inputted.

8. A television image receptor
comprising:
scanning-line conversion means (19, 24) into which a wide television signal or a non-wide television signal upon which a reinforcement signal for compensating for a main image plane signal corresponding to a main image plane part at the center of an image plane is multiplexed is inputted, the scanning-line conversion means outputting a squeeze signal which improves resolution of the main image plane signal, by the use of the reinforcement signal;
system conversion means (42) for converting the squeeze signal to a signal of an HDTV system; and
output means (43, 44, 45) for outputting the signal of the HDTV system from the system conversion means as one for image recording.

9. A television image receptor according to claim 8, characterized in that the reinforcement signal is a vertical reinforcement signal which is multiplexed, during a corresponding period of time, upon non-image parts at upper and lower portions of the image plane and a horizontal reinforcement signal which is multiplexed, during a corresponding period of time, upon the main image plane part.

10. A television image receptor according to claim 9, characterized in that the scanning-line conversion means comprises:
system judgment means for judging whether an inputted signal is a wide television signal or a non-wide television signal, to output a judgment result;
reinforcement-signal demodulation means for demodulating the horizontal reinforcement signal, in case where it is indicated by the judgment result that the wide television signal is inputted, to improve resolution of the main image plane signal in a horizontal direction and for demodulating the vertical reinforcement signal to improve resolution of the main image plane signal in a vertical direction; and
squeeze-signal creation means for increasing the number of effective scanning lines of a main image plane signal from the reinforcement-signal demodulation means in case where it is indicated by the judgment result that the wide television signal is inputted, to create a squeeze signal.

11. A television image receptor according to claim 10, characterized in that the system conversion means comprises:
aspect conversion means for converting an aspect ratio of the inputted signal;
selection means for selecting an output from the aspect conversion means in case where it is indicated by the judgment result that the non-wide television signal is inputted, and for selecting the squeeze signal in case where it is indicated that the wide television signal is inputted;
and
conversion means for converting an output from the selection means to a field frequency and the number of scanning lines of an HDTV system.

12. A television image receptor according to claim 1 or 8, characterized in that the wide television signal is a signal of a second-generation EDTV system, and the non-wide television signal is a signal of the NTSC system.

13. A television image receptor according to claim 1 or 8, characterized in that the non-wide television signal is a signal of a PAL system.
